# NEUE EUROPÄISCHE PATENTSCHRIFT

(11) **EP 1 199 094 B2**
(45) Veröffentlichungstag und Bekanntmachung des Hinweises auf die Entscheidung über den Einspruch: **21.07.2010**
(45) Hinweis auf die Patenterteilung: 29.03.2006
(21) Anmeldenummer: 01122677.6
(22) Anmeldetag: 28.09.2001
(51) Int. Cl.: B01D 39/16, A47L 9/14

(54) **Staubfilterbeutel mit hochporöser Trägermateriallage**
Dust filter bag with highly porous support layer
Sac filtrant à poussière avec couche support à porosité élevée

(30) Priorität: 16.10.2000 DE 10051186
(43) Veröffentlichungstag der Anmeldung: 24.04.2002
(73) Patentinhaber: Neenah Gessner GmbH, 83052 Bruckmühl (DE)
(72) Erfinder: Emig, Dietmar, 83229 Aschau i. Ch. (DE); Raabe, Ernst, 83064 Raubling (DE); Klimmek, Albrecht, 83052 Bruckmühl (DE)
(74) Vertreter: HOFFMANN EITLE

(56) Entgegenhaltungen:
- EP-A- 0 960 645
- DE-U- 29 907 699
- US-A- 5 437 910

## Beschreibung

Die Erfindung betrifft einen Staubfilterbeutel mit einer hochporösen Trägermateriallage und ein Verfahren zur Herstellung des Staubfilterbeutels.

Die Anforderungen an die Filterleistungen der in den modernen Staubsaugern eingesetzten Staubfilterbeutel wurden in den letzten Jahren deutlich gesteigert. Hier wird vor allem dem Bereich der Feinpartikelabscheidung immer größere Bedeutung beigemessen, die über die Verwendung von z.B. Filterschichten aus Meltblown-Feinfaservliesen oder Nanofaservliesen erreicht werden kann. Diese Filterschichten werden mit Trägermaterialien kombiniert und dann zu Staubfilterbeuteln verarbeitet.

Das Trägermaterial für hochwirksame Filterschichten besteht in der Regel aus Papier, da dieses den Vorteil der sehr guten Verarbeitung auf herkömmlichen Staubfilterbeutelmaschinen bietet. Entsprechende Papierträger sind in WO 97/30772 und in EP 0 960 645 offenbart. Unter Verwendung von heute üblichen Klebe- und Falztechniken besitzen Trägermaterialien aus Papier vor allem den Vorteil der hohen Produktivität bei der Beutelherstellung. Weiterhin können Papierträger mit für die Verwendung in Staubsaugern ausreichender mechanischer Festigkeit hergestellt werden.

Ein großer Nachteil der Verwendung von Papieren als Träger liegt in der eingeschränkten Luftdurchlässigkeit, die zu einer geringen Gerätesaug- oder Blasleistung führt. Wird ein Papierträger mit einer höheren Luftdurchlässigkeit hergestellt, nehmen die Festigkeiten des Materials ab: Würden die Anteile der Zellstoffe, die bei der Papiererzeugung zur Erzielung hoher Werte der Luftdurchlässigkeit geeignet sind, deutlich erhöht werden, ginge dies zu Lasten der festigkeitsbildenden Komponenten. Die Festigkeiten des Papiers würden nicht mehr ausreichen, um den mechanischen Beanspruchungen des Beutels im Staubsauger während des Betriebes standzuhalten; das Platzen des Beutels wäre die Folge. Eine Steigerung des Anteils festigkeitsbildender Rohstoffkomponenten durch Erhöhung des Gesamtflächengewichts scheidet ebenfalls aus, da mit Anhebung des Gesamtflächengewichts wiederum eine Reduzierung der Luftdurchlässigkeit des Papiers verbunden ist.

Um den Nachteil des hohen Filterwiderstands und der unerwünschten Verstopfungsneigung entgegenzuwirken, wurden als Trägermaterialien für hocheffektive Filterschichten Spinnvliese eingesetzt. So ist z.B. in der WO 97/30772 ein Staubsaugerbeutel beschrieben, der als Beutelaußenlage ein Spinnvlies, aufweist. Als besonders vorteilhaft, wird hier die geringe Verstopfungsneigung des Beutels beschrieben, da der Verbund bestehend aus Trägermaterial und Filterschicht eine hohe Luftdurchlässigkeit besitzt.

Stark nachteilig wirkt sich jedoch die textilartige Struktur der Spinnvliese aus. Diese besitzen zwar die gewünschten und benötigten Eigenschaften der hohen Luftdurchlässigkeiten bei gleichzeitiger ausreichender Festigkeit bei der Verwendung als Träger in Staubsaugerbeuteln. Derartige Materialien können aber nicht unter Verwendung der üblichen Technologien auf herkömmlichen Staubfilterbeutelmaschinen verarbeitet werden, da sie einerseits nicht die für diesen Verarbeitungsprozess erforderliche Falzbarkeit aufweisen und zudem die für diesen Fertigungsprozess zur Verfügung stehenden Verleimungs- und Klebstofftypen auf Wasserbasis aufgrund des polymeren Rohstoffaufbaus der Spinnvliese ungeeignet sind. Außerdem ist die Bedruckbarkeit der Beutelaußenlage, eine in der Branche unabdingbare Notwendigkeit, mit den bekannten Spinnvliestypen nicht möglich. Zudem muss zur Verarbeitung solcher Materialien ein Stanzprozess, bei dem ein heißer Stempel die Beutel einzeln herausstanzt und dabei gleichzeitig die Nähte versiegelt, verwendet werden. Dieser Prozess ist insofern ungenügend, da die Produktivität sehr gering ist.

Die DE-U-29907699 beschreibt Trägermateriallagen für Filterschichten aus Papier oder Spinnvlies.

Vor diesem Hintergrund liegt der Erfindung die Aufgabe zugrunde, einen Staubfilterbeutel bereitzustellen, der eine hohe Gerätesaug- oder Blasleistung ermöglicht, eine für die Verwendung in Staubsaugern ausreichende mechanische Stabilität aufweist und der einfach und kostengünstig herstellbar ist, sowie ein entsprechendes Herstellungsverfahren bereitzustellen.

Die Aufgabe wird erfindungsgemäß gelöst durch einen Staubfilterbeutel, umfassend mindestens eine Filtermateriallage und mindestens eine Trägermateriallage, wobei die Trägermateriallage eine Luftdurchlässigkeit von mindestens 900 l/m² x s, eine Berstfestigkeit von mindestens 70 kPa, eine Bruchkraft in Längsrichtung von mehr als 10 N und in Querrichtung von mehr als 3 N, eine Biegesteifigkeit in Längsrichtung von mehr als 0,5 cN cm² und in Querrichtung von mehr als 0,25 cN cm², eine Flächenmasse von 30-80 g/m² und eine Tropfeneinsinkzeit von weniger als 1 min. aufweist.

Die Luftdurchlässigkeit der erfindungsgemäß eingesetzten Trägermateriallage beträgt mindestens 900 l/m² x s, vorzugsweise 900 l/m² x s bis 8000 l/m² x s. Besonders bevorzugt ist eine Luftdurchlässigkeit in dem Bereich von 1500-3500 l/m² x s. Die Luftdurchlässigkeit wird gemäß EN ISO 9237 gemessen. Eine Luftdurchlässigkeit von mindestens 900 l/m² x s ermöglicht eine ausreichend hohe Gerätesaug- und Blasleistung.

Die erfindungsgemäß verwendete Trägermateriallage besitzt eine Berstfestigkeit von mindestens 70 kPa, vorzugsweise 70 kPa bis 350 kPa. Besonders bevorzugt ist eine Berstfestigkeit in dem Bereich von 120 bis 210 kPa. Die Berstfestigkeit wird gemäß DIN 53141 gemessen, wobei abweichend von der DIN-Vorschrift eine Prüffläche von 10 cm², und nicht 7,8 cm² verwendet wird. Es wurde gefunden, dass bei Vorliegen einer Trägermateriallage mit einer Berstfestigkeit von mindestens 70 kPa die mechanische Festigkeit des erfindungsgemäßen Staubfilterbeutels ausreichend ist, um ein Platzen des Beutels bei der Verwendung im Staubsauger zu verhindern.

Die Bruchkraft der Trägermateriallage in dem erfindungsgemäßen Staubfilterbeutel beträgt in Längsrichtung mindestens 10 N, vorzugsweise 10 N bis 60 N. Besonders bevorzugt ist eine Bruchkraft in Längsrichtung von 20 bis 40 N. Die Bruchkraft in Längsrichtung wird gemäß EN ISO 1924-2 (N/15 mm Streifenbreite) gemessen.

Die Bruchkraft der erfindungsgemäß eingesetzten Trägermateriallage beträgt in Querrichtung mindestens 3 N, vorzugsweise 3 N bis 50 N. Besonders bevorzugt ist eine Bruchkraft in Querrichtung von 10 bis 30 N. Die Bruchkraft in Querrichtung wird gemäß EN ISO 1924-2 (N/15 mm Streifenbreite) gemessen.

Die Biegesteifigkeit der Trägermateriallage in dem erfindungsgemäßen Staubfilterbeutel beträgt in Längsrichtung mehr als 0,5 cNcm², vorzugsweise mehr als 1,0 cNcm². Die Biegesteifigkeit beträgt in Querrichtung mehr als 0,25 cNcm², vorzugsweise mehr als 0,75 cNcm². Die Biegesteifigkeit wird in Anlehnung an DIN 53864 mit einer Probenbreite von 15 mm gemessen (gemäß DIN 53864 wird eine Probenbreite von 20 mm verwendet).

Erfindungsgemäß wurde gefunden, dass eine Trägermateriallage, die eine entsprechende Bruchkraft und eine entsprechende Biegesteifigkeit aufweist, wie oben angegeben, auf einer herkömmlichen Beutelmaschine, wie sie für die Herstellung von Staubfilterbeuteln mit Papierträgermaterialien verwendet wird, verarbeitbar ist. Die Verwendung einer herkömmlichen Beutelmaschine ermöglicht die einfache und kostengünstige Herstellung des erfindungsgemäßen Staubfilterbeutels.

Weiterhin wurde gefunden, dass für eine Gewährleistung einer ausreichenden Verklebbarkeit mit Klebern auf Wasserbasis, wie sie allgemein bei der Staubfilterbeutelherstellung verwendet werden, es wichtig ist, dass die erfindungsgemäße Trägermateriallage eine Tropfeneinsinkzeit von weniger als 1 Minute aufweisen muss. Die Tropfeneinsinkzeit wird wie folgt gemessen: Ein Tropfen Tinte (angesetzt aus 50 ml Pelikantinte 4001 und 950 ml destilliertem Wasser) wird auf die Probenoberseite mit einer Bürette aus einer Höhe von 1 cm aufgegeben. Die Tropfeneinsinkzeit entspricht der Zeit zwischen der ersten Berührung des Tropfens mit der Oberfläche und dem Zeitpunkt, an dem keine glänzenden Stellen auf der Oberfläche erkennbar sind, d.h. bis der Tropfen ganz in das Material eingedrungen ist. Solange der Tropfen nicht ganz in die Probe eingedrungen ist, ist dies als glänzende Stelle erkennbar. Wenn der Tropfen vollständig in das Material wegdiffundiert ist, ist keine Flüssigkeit mehr auf der Oberfläche sichtbar und das Glänzen ist verschwunden.

Die Flächenmasse des erfindungsgemäßen Trägermaterials beträgt 30 bis 80 g/m2, vorzugsweise 40 bis 60 g/m2, wie durch EN ISO 536 bestimmt.

Zudem weist die erfindungsgemäße Trägermateriallage vorzugsweise einen Rückstellwinkel von weniger als 90°, besonders bevorzugt von weniger als 55°auf. Der Rückstellwinkel ist ein Maß für die Rückfederung nach dem Falzen und wird wie folgt bestimmt: Eine Probe einer Breite von 100 mm und einer Länge von 150 mm wird parallel zur längeren Kante mittig gefaltet. Hierbei muss die Siebseite außen liegen. Der Falz wird mit einer Stahlrolle (Durchmesser 80 mm; Masse 9 kg) in einer Richtung einmal so überrollt, dass das gefalzte Papier in der Mitte der Rolle liegt. Das Papier federt zurück. Der sich nach einer Minute ergebene Winkel wird mit einem Winkelmesser bestimmt.

Die Dicke der Trägermateriallage beträgt vorzugsweise 0,05-1 mm, besonders bevorzugt 0,2-0,5 mm, wie nach EN ISO 534 bei einem Tasterdruck von 20 kPa (mm) bestimmt.

Die obigen physikalischen Eigenschaften der erfindungsgemäßen Trägermateriallage lassen sich während des Herstellungsverfahrens des Trägermaterials einstellen. Das Trägermaterial kann mit einem Verfahren hergestellt werden, das die folgenden Schritte umfasst:
- Mischen von Fasern umfassend Zellstofffasern und schmelzbare Fasern zu einer homogenen Fasermischung,
- Verarbeiten der Fasermischung zu einer Faserbahn im Nasslegeverfahren,
- Trocknen der Faserbahn,
- Verfestigung der getrockneten Faserbahn durch Thermofusion,

Die obigen physikalischen Eigenschaften ergeben sich insbesondere durch geeignete Wahl der Mengen und der Art der Fasern sowie durch eine gezielte Steuerung des Thermofusionsschrittes.

Die Flächenmasse wird durch die Gesamtmasse der verwendeten Fasern unabhängig von dem Mischungsverhältnis eingestellt. Das Mischungsverhältnis hat einen geringen Einfluss auf die sich ergebende Dicke. Zellstofffasern reduzieren generell die Tropfeneinsinkzeit, diese kann aber während des Herstellungsprozesses der Bahn, oder bei der Beutelherstellung durch Zugabe von Netzmitteln gezielt eingestellt werden.

Die verwendeten schmelzbaren Fasern erhöhen die Luftdurchlässigkeit(je mehr Fasern, desto größer die Luftdurchlässigkeit) und steigern die Festigkeitswerte (Berstdruck und Bruchkraft) der gebildeten Bahn, da mehr Verknüpfungspunkte zur Verfügung stehen.

Um die erfindungswesentlichen physikalischen Eigenschaften zu erhalten, werden vorzugsweise 20 bis 90 Gew.%, besonders bevorzugt 40 bis 65 Gew.% Zellstofffasern und 80 bis 10 Gew.%, besonders bevorzugt 60 bis 35 Gew.% schmelzbare Fasern verwendet, jeweils in bezug auf die Gesamtmasse der Fasern. Um die mechanische Festigkeit, insbesondere die Berstfestigkeit der Trägermateriallage, zu steigern, kann man eine Zugabe von Bindemitteln vorsehen.

Die erfindungsgemäß verwendeten Zellstofffasern schließen langfaserige Zellstoffe aus Kiefernsulfat, kurzfaserige Zellstoffe aus Eukalyptus sowie Zellstoffe, die aus Einjahrespflanzen gewonnen werden können, wie z.B. Hanf, Abaka und Sisal, ein.

Die erfindungsgemäß verwendeten schmelzbaren Fasern sind z.B. Schmelzbindefasern aus Polyolefin, Polyamid oder Polyester oder Bikomponentenfasern. Bikomponentenfasern werden bevorzugt. Bikomponentenfasern sind Fasern, die aus zwei verschiedenen Polymeren zusammengesetzt sind, wobei die Polymere jeweils unterschiedliche Schmelzpunkte besitzen. Dies ermöglicht die Verarbeitung dieser Fasern dahingehend, dass das niedrigschmelzende Polymer schmilzt, während der Schmelzpunkt des höherschmelzenden Polymers nicht erreicht wird. Bikomponentenfasern können beispielsweise als Kern-Mantel-Fasern oder als side-by-side-Fasern aufgebaut sein. Erfindungsgemäß bevorzugt sind Fasern vom Kern-Mantel-Typ.

Als Materialien in Bikomponentenfasern können nahezu alle Polymere eingesetzt werden. Beispiele sind Bikomponentenfasern aus Polypropylen und Polyethylen, Polypropylen und Polyester, Polypropylen und Copolyester und Polyester und Nylon 6.

Die Bikomponentenfasern sind vorzugsweise entweder im Luftlege- oder im Nasslegeverfahren verarbeitbar, besonders bevorzugt im Nasslegeverfahren. Geeignete Bikomponentenfasern für das Nasslegeverfahren sind in dem US-Patent Nr. 5 167 765 offenbart. Hierbei handelt es sich um Bikomponentenfasern, die als eine erste Komponente Polyester oder Polyamid umfassen, während die zweite Komponente im wesentlichen aus einem linearen Polyethylen-Copolymer niederer Dichte mit einer Dichte in dem Bereich von 0,88-0,45 g/cm³ und gepfropftem Polyethylen höherer Dichte, HDPE, mit anfänglich einer Dichte in dem Bereich von 0,94-0,965 g/cm³, das mit Maleinsäure oder Maleinsäureanhydrid gepfropft wurde, wodurch eine Bernsteinsäure oder Bernsteinsäureanhydridkette an dem HDPE-Polymer bereitgestellt wird, besteht. Die erste Komponente bildet vorzugsweise den Kern der Bikomponentenfaser, während die zweite Komponente vorzugsweise den Mantel der Bikomponentenfaser bildet. Die erste Komponente weist vorzugsweise einen Schmelzpunkt auf, der mindestens 30°C höher als der der zweiten Komponente ist. Die Bikomponentenfasern weisen vorzugsweise ein Längen- zu Durchmesserverhältnis von ungefähr 1:100 bis ungefähr 1:2000 auf. Die Längen betragen im allgemeinen ungefähr 1 mm bis ungefähr 75 mm, vorzugsweise ungefähr 10 mm bis 15 mm. Solche Bikomponentenfasern werden im allgemeinen auf herkömmlichen Verarbeitungsmaschinen geschnitten.

Besonders bevorzugt sind Bikomponentenfasern, die eine Kernkomponente umfassend Polyethylenterephthalat und eine Mantelkomponente aus Copolyolefin aufweisen, wobei der Kern vorzugsweise bei einer Temperatur über 250°C schmilzt und der Mantel vorzugsweise in einem Temperaturbereich von 110-150°C schmilzt.

Neben den Zellstofffasern und den schmelzbaren Fasern können weiterhin Glasfasern und Synthesefasern als Faserkomponenten verwendet werden. Als Synthesefasern sind z. B. Zelluloseregenerat (Titanol 0,55-6,6 dTex) und sogenannte Stapelfasern, z.B. aus Polyester, Polyamid, Polyacrylnitril, Polyolefin, Polyvinylalkohol (Titanol 0,33-6,6 dTex) geeignet. Als Synthesefasern werden Stapelfasern bevorzugt. Bei Stapelfasern handelt es sich um auf einheitliche Länge geschnittene Filamente, die aus mehreren Einzelfasern bestehen. Die Bündel werden im Herstellungsverfahren der Fasern auf eine bestimmte gleichbleibende Länge geschnitten. Übliche Faserlängen liegen in dem Bereich von 1 mm bis 75 mm. Die Typenauswahl der Fasern erfolgt je nach den erforderlichen Produkteigenschaften. Die Synthesefasern können sowohl separat dispergiert werden, als auch gleichzeitig mit anderen Faserstoffen (z.B. Cellulosefasern) aufgeschlagen werden.

Die Synthesefasern erzeugen einen textilen Charakter in der gebildeten Bahn, die Bahn wird lappig und weich. Erhöht man also den Anteil an Synthesefasern, erhöht sich der Rückstellwinkel, die Biegesteifigkeit wird geringer und das Material lässt sich weniger gut schneiden, stanzen und falzen.

Besonders bevorzugt ist es, Bikomponentenfasern und Synthesefasern in einer Mindestmenge von 30 Gew.-% in bezug auf das Gewicht der Trägermateriallage zu verwenden. Hierdurch wird die erfindungsgemäße Trägermateriallage verschweißbar.

Andererseits kann die erfindungsgemäße Trägermateriallage durch Zusatz eines Heißsiegelmittels heißsiegelfähig gemacht werden.

Die Fasern werden wie folgt verarbeitet: Zunächst werden die einzelnen Komponenten in einer Mischbütte zu einer homogenen Fasermischung gemischt. Dann folgt das Nasslegeverfahren: Die homogene Fasermischung wird auf dem Sieb einer Papiermaschine homogen verteilt und zu einer Faserbahn bzw. Endlosbahn gebildet, die dann der Trockenpartie der Papiermaschine zugeführt wird. Anschließend wird die Bahn bei einer Temperatur getrocknet, die unterhalb des Schmelzpunktes der schmelzbaren Faser, z.B. unterhalb des Schmelzpunktes des Mantels der Bikomponentenfaser liegt. Hierbei finden Zylinder, welche mit Dampf oder Öl beheizt werden, oder sogenannte Durchlufttrockner Verwendung. Bei Durchlufttrocknern wird heiße Luft durch die Bahn gesaugt.

Die dann erhaltene getrocknete Bahn kann anschließend wahlweise in einer sog. Leimpresse mit Bindemittel imprägniert werden, um die mechanische Festigkeit der Trägermateriallage zu steigern. Das erfindungsgemäß verwendbare Bindemittel schließt natürliche Bindemittel wie Stärke sowie synthetische Bindemittel wie Polyvinylacetat, Polyvinylalkohol und Polyacrylate ein. Das Bindemittel wird vorzugsweise in einer Menge von bis zu 30 Gew.% in bezug auf das Gewicht der Trägermateriallage hinzugefügt.

Anschließend wird die Lage der Nachtrockenpartie der Papiermaschine zugefügt. In der Nachtrockenpartie ist ein Trockner, z.B. ein Durchströmtrockner oder ein Zylindertrockner (Kontakttrocknung), vorzugsweise ein Durchströmtrockner integriert, der die nasse Bahn z.B. durch das Hindurchsaugen von heißer Luft trocknet und die Verfestigung der getrockneten Faserbahn durch Thermofusion ermöglicht. Während dieses Schrittes werden die Parameter Lufttemperatur, Luftmenge und Verweilzeit der Bahn in dem Trockner so gesteuert, dass eine ausreichende Energiemenge zugeführt wird, dass die schmelzbaren Fasern - im Falle von Bikomponentenfasern lediglich das niedrigschmelzende Polymer - aufschmelzen bzw. aufschmilzt. Diese Parameter können unabhängig voneinander eingestellt werden. So kann z.B. eine geringere Temperatur oder eine geringere Luftmenge durch eine lange Verweilzeit der gebildeten Bahn ausgeglichen werden. Die spezifischen Werte für die einzelnen Verfahrensparameter hängen dabei in erster Linie von der Art und den Mengen der verwendeten Fasern ab. Liegt der Schmelzpunkt des Mantels einer Bikomponenten-Kern-Mantel-Faser beispielsweise bei 110°C und der Schmelzpunkt des Kerns bei über 200°C, wird die Luft vorzugsweise in dem Durchströmtrockner bei einer Temperatur von 150°C, bei einer Verweilzeit von 1 s und einer Menge von 600 m³/h durchgesaugt.

Ist die eingetragene Energiemenge zu groß, wird die höherschmelzende Komponente der Bikomponentenfasern ebenfalls aufgeschmolzen und die komplette Faser zieht sich zu einem Tropfen zusammen. Damit wird die Vliesstruktur zerstört, und es können sich Löcher bilden. Weiterhin werden die erforderlichen Festigkeitswerte dann nicht erreicht, da die Kernfaser nicht mehr als festigkeitssteigernde Komponente zur Verfügung steht und die Zahl der Polymerverknüpfungen (Bindungspunkte) deutlich reduziert ist.

Zur weiteren Erhöhung der Festigkeit kann die Trägermateriallage wahlweise auch nach dem Thermofusionsschritt in der oben beschriebenen Weise mit Bindemittel imprägniert werden.

Das erhaltene Trägermaterial ist gut verklebbar, falzbar, stanz- und schneidbar.

Aus dem erfindungsgemäßen Trägermaterial kann der erfindungsgemäße Staubbeutels in im wesentlichen zwei Arbeitsgängen hergestellt werden, die auf separaten Maschinenaggregaten erfolgen können:
(a) Fertigung des Rohbeutels,
(b) Konfektionierung zum Fertigbeutel.

Für die Rohbeutelfertigung wird das Trägermaterial in Rollenform der Maschine vorgelegt. Von einer Abwickelstation wird die Trägermaterialbahn unter Anlegung einer gleichbleibenden Zugspannung in die Beutelmaschine eingezogen und zu einem Schlauch gebildet, der mit einer Längsnaht verschlossen wird. Danach wird der Schlauch auf die entsprechende Länge geschnitten und eines der Schlauchenden zu einem Boden verschlossen. Dies geschieht auf der Bodenfalztrommel durch Ausbildung einer Lasche, die umgeschlagen und aufeinander geklebt wird.

Zum Bereitstellen weiterer Lagen auf der Trägermateriallage, insbesondere einer Filtermateriallage, ist die Rohbeutelmaschine mit einer Fütterungseinrichtung versehen. Die Bahnen dieser weiteren Lagen werden der ablaufenden Bahn z.B. der Außenlage aus Trägermaterial vor der Schlauchbildung zugeführt. Man erhält somit Beutel im Beutel.

Dieser Rohbeutel, ob einlagig oder mehrlagig, wird dann auf einer separaten Konfektioniermaschine mit einer für das vorgesehene Staubsaugermodell entsprechenden Halteplatte versehen und zwar meist auf dem vorher ausgebildeten Laschenboden (Fachausdruck = Blockboden) . Das noch offene zweite Schlauchende wird in Form eines Wickelbodens durch Umschlagen und Verkleben des Schlauches verschlossen.

Bei diesem Verfahren kann die erfindungsgemäße Trägermateriallage als Innenlage und/oder Außenlage vorliegen.

Bevorzugte erfindungsgemäß verwendete Filtermateriallagen sind in der deutschen Patentschrift DE 38 12 849 C3 beschrieben. Die Faservlieslage gemäß DE 38 12 849 C3 weist ein Feinfaservlies mit einer Luftdurchlässigkeit von 200-1500 1 x m² x s bei 2 mbar Druck, einem durchschnittlichen Faserdurchmesser von 0,5 bis 18 *µ*m und einem Bruchwiderstand in der Längsrichtung von 2-12 N pro 15 mm Streifenbreite und in der Querrichtung von 1-10 N pro 15 mm Streifenbreite auf. Bevorzugt ist das Feinfaservlies ein Melt-Blown-Vlies, besonders bevorzugt.aus einem thermoplastischen Material wie Polyolefin, Polyamid, Polyester oder Copolymere davon aufgebaut.

Eine weiterhin bevorzugte Faservlieslage ist eine Nanofaservlieslage mit einem durchschnittlichen Faserdurchmesser von 10 bis 1000 nm, vorzugsweise von 50 bis 500 nm, einem Flächengewicht (ISO 536) von 0,05 bis 2 g/m², vorzugsweise von 0,1 bis 0,5 g/m² und einer Luftdurchlässigkeit (ISO 9237) von 1500 bis 20000 l/m²xs, vorzugsweise von 2000 bis 10000 l/m²xs, wie beschrieben in dem deutschen Gebrauchsmuster DE 29 907 699.7.

Der verwendete Begriff "Nanofasern" macht deutlich, dass die Fasern einen Durchmesser im Nanometerbereich, speziell von 10 bis 1000 nm, vorzugsweise von 50 bis 500 nm haben.

Die erfindungsgemäß eingesetzten Nanofaservliese bestehen herstellungsbedingt üblicherweise aus in Wasser löslichen, in einem organischen Lösungsmittel löslichen oder thermoplastischen Polymeren.

Besonders bevorzugte in Wasser lösliche Polymere sind Polyvinylalkohol, Polyvinylpyrrolidon, Polyethylenoxid oder Copolymere davon, Cellulose, Methylcellulose, Propylcellulose, Stärke oder Mischungen hiervon.

Besonders bevorzugte in einem organischen Lösungsmittel lösliche Polymere sind Polystyrol, Polycarbonat, Polyamid, Polyurethan, Polyacrylat, Polymethacrylat, Polyvinylacetat, Polyvinylacetal, Polyvinylether, Celluloseacetat oder Copolymere oder Mischungen davon.

Besonders bevorzugte thermoplastische Polymere sind Polyethylen, Polypropylen, Polybuten-1, Polymethylpenten, Polychlortrifluorethylen, Polyamid, Polyester, Polycarbonat, Polysulfon, Polyethersulfon, Polyphenylsulfid, Polyacryletherketon, Polyvinylidenfluorid, Polyoxymethylen, Polyurethan oder Copolymere oder Mischungen davon.

Das Nanofaservlies, das die entscheidende Komponente für einen hohen Abscheidegrad von Feinstäuben darstellt, wird vorzugsweise erzeugt, indem ein thermoplastisches Polymer in geschmolzenem Zustand oder ein in einem geeigneten Lösungsmittel gelöstes Polymer aus Düsen in einem starken elektrischen Feld zu feinsten Fasern versponnen wird und auf einer Unterlage, die über eine Gegenelektrode geführt wird, in Form eines Flächengebildes abgeschieden wird. Dieses Verfahren ist als Elektrospinning-Verfahren bekannt. Der Faserdurchmesser kann durch die Prozessparameter, nämlich die Viskosität der Schmelze bei Thermoplasten bzw. Konzentration und Viskosität der Polymerlösung gesteuert werden. Die Flächengewichte des Nanofaservlieses werden zum einen durch den Massenfluss durch die Düsen und zum anderen durch die Geschwindigkeit, mit der die Unterlage unter den Düsen bewegt wird, bestimmt. Die Luftdurchlässigkeit des Nanofaservlieses wird durch die Dicke der Fasern und deren Packungsdichte beeinflusst.

Die Erzeugung von Nanofasern aus verschiedenen Polymeren wird von Darell H. Reneker and Iksoo Chun in der Veröffentlichung "Nanometre diameter fibres of polymer, produced by electrospinning", Nanotechnology 7, 1996, S. 216-223, beschrieben.

Der erfindungsgemäße Staubfilterbeutel kann neben der Filtermateriallage und der Trägermateriallage weitere Lagen, z.B. Stützelemente, wie Stützvliese und Zwischenvliese, aufweisen.

Die einzelnen Lagen in dem erfindungsgemäßen Staubfilterbeutel können fest miteinander verbunden sein, oder sie können frei gegeneinander beweglich sein. Eine feste Verbindung zwischen Filtermateriallage und Trägermateriallage kann dadurch erreicht werden, dass die Fasern der Filtermateriallage direkt auf die Trägermateriallage im thermoplastischen Zustand abgelegt werden. Wenn andererseits die Filtermateriallage über eine Längsklebenaht mit der Trägermateriallage verbunden wird, bleibt die Filtermateriallage im wesentlichen gegenüber der Trägermateriallage frei beweglich.

Wenn die Filtermateriallage eine geringe mechanische Festigkeit aufweist und nicht direkt auf der Trägermateriallage abgelegt wird, umfasst der Staubfilterbeutel vorzugsweise ein Stützelement. Eine lose Verbindung zwischen Trägermateriallage und Filtermateriallage kann dann durch Vorsehen einer Längsklebenaht zwischen Stützelement und Trägermaterial derart erhalten werden, dass die Filtermateriallage zwischen Trägermateriallage und Stützelement gehalten wird.

Eine Ausführungsform besteht darin, die Filtermateriallage mit einem innenliegenden Stützelement über eine Längsklebenaht und gegebenenfalls zusätzlich über eine Verklebung im Bodenbereich des Beutels lose zusammenzufügen, so dass die Filtermateriallage und das Stützelement frei beweglich sind, und die Filtermateriallage durch die Trägermateriallage und das innere Stützelement gehalten werden.

Bei einer weiteren Ausführungsform ist die Filtermateriallage mit dem Stützelement über eine rasterförmige oder vollflächige Imprägnierung und/oder Beschichtung zu einer doublierten Kombination verarbeitet. Zum Kaschieren eignen sich spezielle Bindemittel, wobei Stärke, Acrylate und Vinylacetate als Kleber bevorzugt sind. Eine andere Möglichkeit besteht darin, die Filtermateriallage mit dem Stützelement über ein bindemittelfreies Thermobond-Verfahren, z.B. Kalandrieren, zu verbinden. Diese Zweilagen-Version kann auch erzeugt werden, indem man bei der Herstellung der Filtermateriallage deren Fasern direkt auf das Stützelement ablegt und im thermoplastischen Zustand mit dem Stützelement verbindet. Die fertiggestellte zweilagige Kombination kann anschließend im Staubfilterbeutel der Trägermateriallage über die Filtermateriallage oder über das Stützelement zugewandt sein.

Sollten im fertiggestellten Beutel die einzelnen Lagen nur lose zusammengefügt sein, dann werden die Trägermateriallage, die Filtermateriallage und, sofern vorhanden, das innere Stützelement auf separaten Bahnen der Beutelmaschine zugeführt und dort in an sich bekannter Weise zum Beutel verarbeitet. Verwendet man eine doublierte Kombination aus Filtermateriallage und Stützelement bzw. aus Filtermateriallage und Trägermateriallage, dann wird man die Filtermateriallage und das Stützelement bzw. die Filtermateriallage und die Trägermateriallage zu einer Bahn zusammenführen und verbinden, bevor sie der Beutelmaschine zugeführt werden. Die gebildete Kombination und die Trägermateriallage bzw. u.U. das Stützelement werden, sofern erwünscht, anschließend auf zwei Bahnen in die Beutelmaschine gezogen und nun in bekannter Weise zum Beutel weiterverarbeitet.

Filtermateriallage und Trägermateriallage werden vorzugsweise so miteinander kombiniert, dass die Filtermateriallage nicht die volle Breite der Trägermateriallage abdeckt und somit eine oder zwei Randstreifenaussparungen auf der Trägermateriallage bildet, wie in EP 0 635 297 A1 offenbart.

Die folgenden Beispiele verdeutlichen die hervorragenden Eigenschaften des erfindungsgemäßen Trägermaterials im Vergleich zu herkömmlichen Filtermaterialien.

### Beispiele

### Beispiel 1: Herstellung des erfindungsgemäß eingesetzten Trägermaterials

In Aufschlagbehältern, den sogenannten Pulpern, wird Wasser vorgelegt. Dem Wasser werden dann jeweils Zellstofffasern, Kurzschnitt-Polyesterfasern und Kern-Mantel-Fasern (Stapelfasern aus >81 % Polyethylenterephthalat-Kern mit einem Schmelzpunkt von 256°C und >51 % Copolyolefin-Mantel mit einem Schmelzpunkt von 110-150°C; erhältlich von Kosa, Salisbury, NC, USA, als "Copolyolefin Bicomponent Fiber"), bestehend aus Polyethylenteraphtalat und einem Mantel aus Copolyolefin, zugegeben, und unter Rühren werden die Fasern im Wasser dispergiert. Hierbei wurden die Zellstofffasern alleine und die Polyesterfasern zusammen mit den Kernmantelfasern dispergiert. Hierbei wird auf eine vollständige Dispergierung geachtet, da die Bildung und Weiterverarbeitung von aggregierten Faserknäueln sich nachteilig auf die Produkteigenschaften auswirkt. In einer Mischbütte werden dann die beiden Dispersionen zusammengeführt, so dass eine Fasermischung aus 46 Gew.-% Zellstofffasern von der Einjahrespflanze Abaca, 16 Gew.-% Kurzschnitt-Polyesterfasern (12 mm) und 38 % KernMantelfasern (Copolyolefin Bicomponent Fiber; geliefert von Kosa, Salisbury, NC, USA) erhalten wird (Gew.-%-Angaben analysetrocken). Diese homogene Fasermischung wird auf dem Sieb einer Papiermaschine homogen verteilt, und ein Großteil des Wassers wird durch das Sieb abgesaugt. Hierbei wird auf eine möglichst gleichmäßige Faserformation geachtet, so dass die fertige Fasermischung homogen vorliegt und sich homogen auf dem Sieb verteilt. In dem nachfolgenden Trocknungsprozess wird das in der gebildeten Bahn noch enthaltende Wasser durch Temperaturzufuhr entfernt, ohne dass die Schmelztemperatur der Bikomponentenfaser erreicht wird. Die trockene gebildete Bahn wird in einer sogenannten Leimpresse mit dem Bindemittel Polyvinylacetat in einer Menge, dass es getrocknet zu 9 Gew.-% im Material enthalten ist, imprägniert und anschließend auf die Nachtrockenpartie der Papiermaschine geführt. In der Nachtrockenpartie ist ein Durchströmtrockner integriert, der die nasse, imprägnierte Bahn durch das Hindurchsaugen von heißer Luft trocknet. Während dieses Schrittes beträgt die Lufttemperatur 150°C , die Luftmenge 600 m³/h und die Verweilzeit 1 s.

Die folgenden physikalischen Eigenschaften des erhaltenen Materials wurden gemäß den jeweils angegebenen Prüfmethoden bestimmt:

| | |
|---|---|
| Flächenmasse: | EN ISO 536 (g/m²) |
| Dicke : EN ISO 534 | Tasterdruck: 20 kPa (mm) |
| Luftdurchlässigkeit: | EN ISO 9237 (l/m²s) |
| Bruchwiderstand: | EN ISO 1924-2 (N/15 mm Streifenbreite) |
| Bruchdehnung: | EN ISO 1924-2 (N/15 mm Streifenbreite) |
| Berstdruck: | an Anlehnung an DIN 53141, Prüffläche 10 cm² (kPa) |
| Biegesteifigkeit: | in Anlehnung an DIN 53864, Probenbreite 15 mm (cN · cm²) |
| Rückstellwinkel: | Werksinterne Prüfnorm (°) |
| Tropeneinsinkzeit: | Werksinterne Prüfnorm (s) |
| Abscheidegrad: | DIN 44 596 T2E |
| Filterwiderstand: | DIN 44 956 T2E |

### Rückstellwinkel:

Der Rückstellwinkel ist ein Maß für die Rückfederung nach dem Falzen. Eine Probe von 100 mm Breite und 150 mm Länge wird parallel zur längeren Kante mittig gefaltet. Hierbei muss die Siebseite außen liegen. Der Falz wird mit einer Stahlrolle von ∅ 80 mm und 9 kg Masse in einer Richtung einmal so überrollt, dass das gefalzte Papier in der Mitte der Rolle liegt. Die Probe federt zurück. Der sich nach einer Minute ergebene Winkel wird mit einem Winkelmesser bestimmt.

### Tropfeneinsinkzeit:

Die Tropfeneinsinkzeit ist ein Maß, wie lange ein Tropfen Tinte braucht, um in ein Material vollständig einzudringen. Hierbei wird das Verhalten des Leimes bei der Beutelherstellung simuliert.

Ein Tropfen Tinte (angesetzt aus 50 ml Pelikantinte 4001 und 950 ml destilliertem Wasser) wird auf die Probenoberseite mit einer Bürette aus einer Höhe von 1 cm aufgegeben. Die Einsinkzeit des Tropfens wird abgestoppt, wenn keine glänzenden Stellen auf der Tropfenfläche erkennbar sind.

Die Ergebnisse zeigt Tabelle 1.

### Vergleichsbeispiel 1:

Eine Papierlage, wie in DE 38 12 849 C3 in den Beispielen 1 und 2 verwendet, wurde hergestellt und die gleichen Eigenschaften wie in Beispiel 1 bestimmt. Die Ergebnisse zeigt Tabelle 1.

### Vergleichsbeispiel 2:

Ein Spinnvlies der Firma Don & Low Nonwovens Ltd., Angus DD8 IEY, Schottland, wurde bezüglich der gleichen Eigenschaften wie in Beispiel 1 untersucht. Die Ergebnisse zeigt Tabelle 1.

**Tabelle 1**

| | | Vergl. Bsp.1 | Vergl. Bsp.2 | Erfind. Bsp.1 |
|---|---|---|---|---|
| Flächenmasse | g/m² | 45 | 31 | 45 |
| Dicke | mm | 0,20 | 0,28 | 0,27 |
| Bruchkraft längs | N | 39 | 19 | 31 |
| Bruchkraft quer | N | 22 | 11 | 14 |
| Bruchdehnung längs | % | 2,1 | 53 | 2,3 |
| Bruchdehnung quer | % | 4,2 | 47 | 4,6 |
| Luftdurchlässigkeit | l/m²/s | 400 | 3800 | 2000 |
| Berstdruck | kPa | 130 | 190 | 150 |
| Rückstellwinkel längs | ° | 31 | >90 | 45 |
| Rückstellwinkel quer | ° | 45 | 55 | 68 |
| Biegesteifigkeit längs (30°) | cN cm² | 4,4 | 0,16 | 4,5 |
| Biegesteifigkeit quer (30°) | cN cm² | 1,9 | 0,08 | 2,1 |
| Tropfeneinsinkzeit | sec. | 5 | * | 3 |

| | | | | |
|---|---|---|---|---|
| * Prüfung wurde nach 2h abgebrochen, da der Tropfen nicht in das Material eindrang. | | | | |

Wie aus obiger Tabelle ersichtlich, verbindet die erfindungsgemäße Trägermateriallage die vorteilhaften Eigenschaften einer Papierträgerlage mit den vorteilhaften Eigenschaften eines Spinnvlieses.

### Beispiel 2:

### Verarbeitung eines erfindungsgemäßen verwendeten Trägermaterials

Das in Beispiel 1 hergestellte Trägermaterial wurde mit Feinfaserfiltervlies (Meltblown) ultraschallverschweißt.

Es wurden die Luftdurchlässigkeit, der Abscheidegrad, und der Filterwiderstand des erhaltenen mehrlagigen Materials getestet. Die Ergebnisse sind in Tabelle 2 gezeigt.

### Vergleichsbeispiel 3:

Beispiel 2 wurde wiederholt, nur dass anstatt des erfindungsgemäß verwendeten Trägermaterials aus Beispiel 1 eine Papierlage, wie in DE 38 128 49 C3 in den Beispielen 1 und 2 verwendet, verwendet wurde. Das erhaltene mehrlagige Material wurde wiederum bezüglich der Luftdurchlässigkeit, des Abscheidegrades und des Filterwiderstandes getestet. Die Ergebnisse sind in Tabelle 2 gezeigt.

### Vergleichsbeispiel 4:

Beispiel 2 wurde wiederholt, nur dass anstatt des erfindungsgemäß verwendeten Trägermaterials aus Beispiel 1 ein Spinnvlies der Firma Don & Low Nonwovens Ltd., Angus DD8 IEY, Schottland verwendet wurde. Das erhaltene mehrlagige Material wurde wiederum bezüglich der Luftdurchlässigkeit, des Abscheidegrades und des Filterwiderstandes getestet. Die Ergebnisse sind in Tabelle 2 gezeigt.

**Tabelle 2**

| | | Vergl. Bsp. 3 | Erfind. Bsp. 2 | Vergl. Bsp. 4 |
|---|---|---|---|---|
| Flächenmasse [g/m²] | DIN ISO 536 | 45 (Papier) 20 (Meltblown) | 45 (Träger) 20 (Meltblown) | 31 (Spinnvlies) 20 (Meltblown) |
| Luftdurchlässigkeit [1/m²s] | EN ISO 9237 | 230 | 600 | 675 |
| Abscheidegrad [%] | DIN 44956 T2 E | 97,0 | 96,5 | 96,0 |
| Filterwiderstand Δp1 [Pa] | DIN 44956 T2 E | 530 | 200 | 175 |
| Filterwiderstand Δp2 [Pa] | DIN 44956 T2 E | 950 | 400 | 375 |

Bezüglich der Eigenschaften der drei getesteten zweilagigen Materialien ist somit folgendes festzuhalten:

### Vergleichsbeispiel 2 (mit Papieraußenlage):

Die Filterbeutel mit dem Aufbau stellen den Stand der Technik dar und weisen heute noch die beschriebenen Produktnachteile wie z.B. höheren Filterwiderstand mit dem niedrigeren Volumenstrom, der niedrigeren Gerätesaugleistung und der höheren Verstopfungsneigung auf. Allerdings sind diese Filterbeutel gut auf den herkömmlichen Beutelmaschinen produzierbar.

### Vergleichsbeispiel 4 (mit Spinnvliesaußenlage):

Filterbeutel mit diesem Aufbau würden im Vergleich zu den heutigen Beuteln mit einer Papieraußenlage zwar deutliche Vorteile bezüglich des Filterwiderstands und des daraus resultierenden höheren Volumenstroms und der geringeren Verstopfungsneigung bis hin zu einer größeren Gerätesaugleistung aufweisen, nur sind diese Beutel auf herkömmlichen Fertigungsmaschinen erst gar nicht produzierbar (Verklebbarkeit, Falzbarkeit, Stanzbarkeit).

### Beispiel 2 (mit erfindungsgemäßem Trägermaterial):

Die erfindungsgemäßen Beutel vereinen in sich die guten Merkmale (geringer Filterwiderstand und daraus resultierend hoher Volumenstrom, hohe Gerätesaugleistung und geringe Beutelverstopfungsneigung), wie sie ein Spinnvliesenthaltender Beutel aufweisen würde. Vorteil hier ist, dass er eben überhaupt auf herkömmlichen Beutelmaschinen produzierbar ist.

## Patentansprüche

1. Staubfilterbeutel, umfassend mindestens eine Filtermateriallage und mindestens eine Trägermateriallage, die eine Bruchkraft in Längsrichtung von mehr als 10 N und in Querrichtung von mehr als 3 N, eine Flächenmasse von 30-80 g/m² aufweist, **dadurch gekennzeichnet, dass** die mindestens eine Trägermateriallage eine Luftdurchlässigkeit von mindestens 900 1/m² x s, eine Berstfestigkeit von mindestens 70 kPa, eine Biegesteifigkeit in Längsrichtung von mehr als 0,5 cN cm² und in Querrichtung von mehr als 0,25 cN cm², und eine Tropfeneinsinkzeit von weniger als 1 min. aufweist.

2. Staubfilterbeutel gemäß Anspruch 1, **dadurch gekennzeichnet, dass** der Rückstellwinkel der Trägermateriallage in Längs- und Querrichtung weniger als 90° beträgt.

3. Staubfilterbeutel gemäß einem der vorhergehenden Ansprüche, **dadurch gekennzeichnet, dass** die Dicke der Trägermateriallage 0,05-1 mm beträgt.

4. Staubfilterbeutel gemäß einem der vorhergehenden Ansprüche, **dadurch gekennzeichnet, dass** die Trägermateriallage 20-90 Gew.-% Zellstofffasern, 10-80 Gew.-% Bikomponentenfasern und 0-30 Gew.-% Bindemittel, jeweils in Bezug auf das Gewicht der Trägermateriallage, enthält.

5. Staubfilterbeutel gemäß Anspruch 4, **dadurch gekennzeichnet, dass** die Trägermateriallage weiterhin Glasfasern enthält.

6. Staubfilterbeutel gemäß einem der Ansprüche 4 oder 5, **dadurch gekennzeichnet, dass** die Trägermateriallage weiterhin Synthesefasern enthält.

7. Staubfilterbeutel gemäß Anspruch 6, **dadurch gekennzeichnet, dass** die Gesamtmenge von Synthesefasern und Bikomponentenfasern mindestens 30 Gew.-% in Bezug auf das Gewicht der Trägermateriallage beträgt.

8. Verfahren zur Herstellung eines Staubfilterbeutels gemäß einem der vorhergehenden Ansprüche, umfassend die Schritte:
- Mischen von Fasern umfassend Zellstofffasern und schmelzbare Fasern zu einer homogenen Fasermischung,
- Verarbeiten der Fasermischung zu einer Faserbahn im Nasslegeverfahren,
- Trocknen der Faserbahn,
- Verfestigung der getrockneten Faserbahn durch Thermofusion zu einer Trägermateriallage,
- Verarbeitung der Trägermateriallage mit einer Filtermateriallage zu einem Rohbeutel,
- Konfektionierung des Rohbeutels zu einem Staubfilterbeutel.

9. Verfahren gemäß Anspruch 8, **dadurch gekennzeichnet, dass** nach dem Trocknen der Faserbahn oder nach der Verfestigung der getrockneten Faserbahn durch Thermofusion mit Bindemittel imprägniert wird.

## Claims

1. Dust filter bag comprising at least one filter material layer and at least one support material layer, which has a breaking force in longitudinal direction of more than 10 N and in transverse direction of more than 3 N, a weight per unit area of 30-80 g/m², **characterised in that** the at least one support material layer has an air permeability of at least 900 l/m² x s, a bursting strength of at least 70 kPa, a flexural stiffness in longitudinal direction of more than 0.5 cN cm² and in transverse direction of more than 0.25 cN cm², and a drop sinking-in time of less than 1 minute.

2. Dust filter bag according to claim 1, **characterised in that** the recovery angle of the support material layer in longitudinal and transverse direction is less than 90°.

3. Dust filter bag according to one of the preceding claims, **characterised in that** the thickness of the support material layer is 0.05-1 mm.

4. Dust filter bag according to one of the preceding claims, **characterised in that** the support material layer contains 20-90 wt.% of cellulose fibres, 10-80 wt.% of bicomponent fibres and 0-30 wt.% of binder, in each case relative to the weight of the support material layer.

5. Dust filter bag according to claim 4, **characterised in that** the support material layer also contains glass fibres.

6. Dust filter bag according to one of claims 4 or 5, **characterised in that** the support material layer also contains synthetic fibres.

7. Dust filter bag according to claim 6, **characterised in that** the total quantity of synthetic fibres and bicomponent fibres is at least 30 wt.% relative to the weight of the support material layer.

8. Process for producing a dust filter bag according to one of the preceding claims, comprising the steps:
- mixing fibres comprising cellulose fibres and meltable fibres to form a homogeneous fibre mixture,
- processing the fibre mixture to form a fibre web by the wet-laying process,
- drying the fibre web,
- compacting the dried fibre web by thermofusion to form a support material layer,
- processing the support material layer with a filter material layer to form a crude bag,
- assembling the crude bag to form a dust filter bag.

9. Process according to claim 8, **characterised in that** after drying the fibre web or after compacting the dried fibre web by thermofusion, impregnation is carried out using binder.

## Revendications

1. Sac filtrant à poussière, comprenant au moins une couche de matériau filtrant et au moins une couche de matériau support, présentant une force de rupture, en direction longitudinale, supérieure à 10 N et, en direction transversale, supérieure à 3 N, une masse surfacique de 30 à 80 g/m², **caractérisé en ce que** la au moins une couche de matériau support présente une perméabilité à l'air d'au moins 900 l/m² x s, une résistance à l'éclatement d'au moins 70 kPa, une rigidité en flexion, en direction longitudinale, supérieure à 0,5 cN cm² et, en direction transversale, supérieure à 0,25 cN cm², et un temps de pénétration par une goutte inférieur à 1 min.

2. Sac filtrant à poussière selon la revendication 1, **caractérisé en ce que** l'angle de rappel de la couche de matériau support, en direction longitudinale et transversale, est inférieur à 90°.

3. Sac filtrant à poussière selon l'une des revendications précédentes, **caractérisé en ce que** l'épaisseur de la couche de matériau support est dans la fourchette de 0,05 à 1 mm.

4. Sac filtrant à poussière selon l'une des revendications précédentes, **caractérisé en ce que** la couche de matériau support contient de 20 à 90 % en poids de fibres de cellulose, de 10 à 80 % en poids de fibres bi-composants et de 0 à 30 poids de liant, chaque fois en se référant au poids de la couche de matériau support.

5. Sac filtrant à poussière selon la revendication 4, **caractérisé en ce que** la couche de matériau support contient en plus des fibres de verre.

6. Sac filtrant à poussière selon l'une des revendications 4 ou 5, **caractérisé en ce que** la couche de matériau support contient en plus des fibres de synthèse.

7. Sac filtrant à poussière selon la revendication 6, **caractérisé en ce que** la quantité globale de fibres de synthèse et de fibres bi-composants est d'au moins 30 % en poids, en se référant au poids de la couche de matériau support.

8. Procédé de fabrication d'un sac filtrant à poussière selon l'une des revendications précédentes, comprenant les étapes suivantes :
- mélange de fibres contenant des fibres de cellulose et des fibres fusibles, pour donner un mélange de fibres homogène,
- transformation du mélange de fibres en une bande de fibres, dans un procédé de pose humide,
- séchage de la bande de fibres,
- consolidation de la bande de fibres séchée, par thermofusion, pour donner une couche de matériau support,
- transformation de la couche de matériau support avec une couche de matériau filtrant, pour donner un sac brut,
- confection du sac brut, pour donner un sac filtrant à poussière.

9. Procédé selon la revendication 8, **caractérisé en ce que,** après le séchage de la bande de fibres ou après la consolidation de la bande de fibres séchée par thermofusion, on procède à une imprégnation avec un liant.
